# EUROPEAN PATENT APPLICATION

(11) **EP 2 749 605 A2**
(43) Date of publication of application: **02.07.2014**
(21) Application number: 12825113.9
(22) Date of filing: 22.08.2012
(51) Int. Cl.: C08L 101/16, C08L 67/02, C08L 23/00, C08K 3/26

(54) **BIODEGRADABLE RESIN COMPOSITION, AND DRAINING BOARD CORE MATERIAL AND DRAINING BOARD PRODUCED THEREFROM**

(30) Priority: 24.08.2011 KR 20110084784
(71) Applicant: Samsung Fine Chemicals Co., Ltd., Ulsan-city 680-090 (KR); S-Enpol Co., Ltd., Gangwon-do 220-805 (KR)
(72) Inventor: YOON, Yoon Mo, Yangpyeong-Gun Gyeonggi-Do 476-822 (KR); CHO, Kwan Young, Seoul 139-220 (KR); OH, Uk, Seoul 134-090 (KR); CHUN, Jong Pil, Daejeon-Si 305-728 (KR); YUN, Ki Chull, Cheonan-Si Chungcheongnam-Do 330-260 (KR); PARK, Yong Dae, Wonju-Si Gangwon-Do 220-789 (KR)
(74) Representative: Kador & Partner
(86) International application number: PCT/KR2012/006675
(87) International publication number: WO 2013/028008

(57) **Abstract**

A biodegradable resin composition is provided. More particularly, a biodegradable resin composition for a core of a drain board, which has excellent extrusion productivity and thus improves productivity by improving physical properties, for example, reducing contractibility and elasticity recovery, according to original characteristics of a biodegradable resin without degradation in biodegrability of the biodegradable resin by mixing the biodegradable resin with an additional material for improving processibility in suitable amounts, a core of a drain board using the same, and a method of manufacturing a drain board.

The biodegradable resin composition is prepared by mixing 5 to 60 parts by weight of calcium carbonate, 1 to 10 parts by weight of a thermoplastic resin, and 0.1 to 5 parts by weight of a lubricant with respect to 100 parts by weight of a biodegradable polymer compound, or mixing 1 to 5 parts by weight of the additives, which are formed in a pellet state to have 60 to 90 parts by weight of calcium carbonate, 5 to 15 parts by weight of a thermoplastic resin, and 1 to 5 parts by weight of a lubricant, with respect to 100 parts by weight of a biodegradable polymer compound.

## Description

### [Technical Field]

The present invention relates to a biodegradable resin composition, a core of a drain board manufactured thereof and a drain board, and more particularly, to a biodegradable resin composition for a core of a drain board, which has excellent extrusion productivity due to improved physical properties, for example, reducing contractibility and elasticity recovery, according to original characteristics of a biodegradable resin without degradation in biodegrability of the biodegradable resin by mixing the biodegradable resin with an additive for improving processibility in suitable amounts, a drain board core using the same, and a drain board using the core.

### [Background Art]

Consumption levels of plastics continue to increase from industrial materials to disposable materials and packing materials since they are light, strong, easily processed and difficult to degrade. Various kinds of plastics are disposed by burying or burning after use, or regenerated to reuse. However, a method of treating waste such as burying or burning has harmful effects on the environment. Accordingly, to solve such environmental problems, various biodegradable plastics which maintain their function and structure in use but are degraded into water and carbon dioxide by microorganisms once they are disposed, are being developed.

For example, in U.S. Patent Nos. 5,234,977, 5,256,711, 5,264,030, 5,292,782, 5,334,634, 5,461,093, 5,461,094, 5,569,692, 5,616,671, 5,696,186, 5,869,647, and 5,874,486, a technique of manufacturing a biodegradable plastic by mixing starch, which is inexpensive and easily biodegraded, with a general-purpose resin such as polyethylene, polypropylene, or polystyrene and a polyester-based matrix resin, is disclosed. However, this technique has disadvantages of discoloration due to a plasticizer added with the starch, and considerable degradation in physical properties of the plastic due to heavy fume occurring in processing.

In addition, in U.S. Patent Nos. 4,133,784 and 4,337,181, a method of manufacturing a film by adding gelatinized starch to an ethylene-acrylic acid copolymer is disclosed, but this method also has disadvantages in that the ethylene-acrylic acid copolymer is expensive, and physical properties of the film are extremely inappropriate to put to practical use and difficult to be biodegradable.

Moreover, while, in U.S. Patent Nos. 5,254,607, 5,256,711, and 5,258,430, a technique using gelatinized starch is also disclosed, a separate device for adding water and a plasticizer in large amounts to gelatinize the starch is needed, and degradability of a synthetic resin, such as an ethylene-vinylalcohol copolymer, used to enhance physical properties and dimension stability, is not verified.

Furthermore, in Korean Patent Nos. 1994-0011542, 1994-0011556 and 1994-0011558, reactive extrusion was induced using an organic acid catalyst and a binder to induce chemical bonding of starch and polyethylene, but it had a possibility of having unreacted crude monomers, and when starch content was 30% or more, it was seen that mechanical properties were considerably degraded.

Accordingly, research into a method of preparing a biodegradable resin using a cellulose derivative has been conducted, and particularly, a main goal of the research was about a biodegradable resin using cellulose acetate among the cellulose derivatives.

The cellulose acetate is prepared by converting cellulose with acetic ester. It is known that the cellulose acetate is originally biodegradable, but practically, it is difficult to degrade. That is, although a molded product formed of cellulose acetate may be buried in soil, it still maintains its shape even after 12 years, and therefore it takes quite a long time to completely biodegrade the product. In addition, the molded product may be buried as waste, or may be left alone in nature without recovery as waste.

For these reasons, there is on-going research into a method of enhancing biodegradability of cellulose acetate. In Japanese Patent Laid-Open No. Hei6-199901, a method of controlling biodegrabability of cellulose acetate by adding an acid compound having a larger acid dissociation constant than acetic acid to the cellulose acetate, is disclosed. However, this method has a problem in that a product made of cellulose acetate has a strong acetic acid odor, which is generated by chemical hydrolysis of the cellulose acetate due to the acid compound at the time that the acid compound is added to the cellulose acetate.

While the conventional biodegradable resins described above were possibly applied as alternative environment-friendly materials, the scope of the application was very limited due to a lack of productivity according to original properties of the material. That is, the resins are difficult to apply to various products due to contraction of 50% or more based on a general-purpose resin, and have a lack of plasticity such that the resins are restored to their original state, that is, the initial contraction state, even when a width contracted for molding increases due to very high elasticity recovery to turn back to the initial contraction state even when compulsory molding is induced after contraction.

For these problems, it is difficult to process and produce plastic molded products using biodegradable resins.

### [Disclosure]

### [Technical Problem]

The present invention is directed to providing a biodegradable resin composition for a core of a drain board which has a biodegradable resin as a main element, and may be used as an alternative for a general extruded plastic product by improving physical properties such as contraction ratio and elasticity recovery in an extrusion process without inhibition of biodegradability, which is an original characteristic of the biodegradable resin, and increasing processing adaptability.

The present invention is also directed to providing a biodegradable core of a drain board, and a drain board using the same.

### [Technical Solution]

In one aspect, a biodegradable resin composition for a core of a drain board having excellent extrusion productivity may include 5 to 60 parts by weight of calcium carbonate, 1 to 10 parts by weight of a thermoplastic resin, and 0.1 to 5 parts by weight of a lubricant with respect to 100 parts by weight of a biodegradable polymer compound.

Here, the biodegradable polymer compound is polybutylene succinate (PBS) or polybutylene adipate-co-terephthalate (PBAT).

Here, the thermoplastic resin may be one selected from the group consisting of a polypropylene resin, a polyethylene resin and a mixture thereof.

Here, 1 to 50 parts by weight of the additives may be mixed with respect to 100 parts by weight of the biodegradable polymer compound in the form of a chip processed by solidifying a mixture including 60 to 90 parts by weight of calcium carbonate, 5 to 15 parts by weight of a thermoplastic resin, and 1 to 5 parts by weight of a lubricant in a pellet state.

Here, the lubricant may be one or a mixture of at least two selected from the group consisting of oleic acid amide, erucic acid amide, molybdenum disulfide, glycerol monostearate, palmityl alcohol and silicon powder.

In addition, the lubricant may include a mixture of 40 to 50 wt% of dimethylsilicon oil or a silane coupling agent with low-density polyethylene having an average molecular weight of 5,000 to 10,000.

In another aspect, a method of manufacturing a core of a drain board according to the present invention may include preparing a mixture of a biodegradable polymer compound, calcium carbonate, a thermoplastic resin, and a lubricant in above-mentioned ratios, melting the mixture at a temperature of 160 to 230 °C, providing the molded product to dies, extrusion-molding the molded product at 150 to 220 °C through the dies into a core, and cooling the core.

Here, a cooling temperature of the cooling device may be set to 10 to 25 °C at an entry, 15 to 30 °C at a middle part, and 15 to 30 °C at an end.

In the method of manufacturing a core of a drain board, the operation of preparing a mixture may be divided into an operation of processing a chip by mixing calcium carbonate, a thermoplastic resin and a lubricant in the above-mentioned ratios, melt-extruding and pelletizing the mixture, and an operation of mixing the chip with a biodegradable polymer compound.

In still another aspect, a method of manufacturing a drain board according to the present invention may further include surrounding an outside of the cool molded product with a filter, in addition to the operations according to the method of manufacturing a core of a drain board described above. The operation of surrounding an outside of the molded product with a filter may be executed by bonding the filter to an outside of the molded core by ultrasonic joining or melting an adhesive resin to adhere the filter.

Here, the filter may be felt.

### [Advantageous Effects]

In an aspect of compatibility, a biodegradable resin composition provided according to the present invention can be improved in physical properties such as contractibility and elasticity recovery by mixing an additive to improve processing adaptability in a biodegradable resin, and thus productivity can be ensured on the same level as a general-purpose resin, and the scope of alternating general plastic with the biodegradable resin, which was limited in the past, can be extended.

In addition, the biodegradable resin composition according to the present invention can reduce production cost of a drain board core due to enhanced productivity according to improved physical properties of the composition.

### [Description of Drawings]

The above and other objects, features and advantages of the present invention will become more apparent to those of ordinary skill in the art by describing in detail exemplary embodiments thereof with reference to the adhered drawings, in which:
FIGS. 1 and 2 are block diagrams illustrating examples of a process of manufacturing a core of a drain board using a biodegradable resin composition according to the present invention;
FIG. 3 is a process diagram illustrating an example of a process of manufacturing a core of a drain board according to the present invention;
FIG. 4 show examples of a core of a drain board manufactured by the manufacturing method according to the present invention; and
FIG. 5 shows other examples of the core of the drain board of FIG. 4 according to the present invention.

### [Mode for Invention]

Hereinafter, the present invention will be described in detail with reference to Examples according to the present invention and Comparative Examples not according to the present invention, but the scope of the present invention is not limited to the following examples.

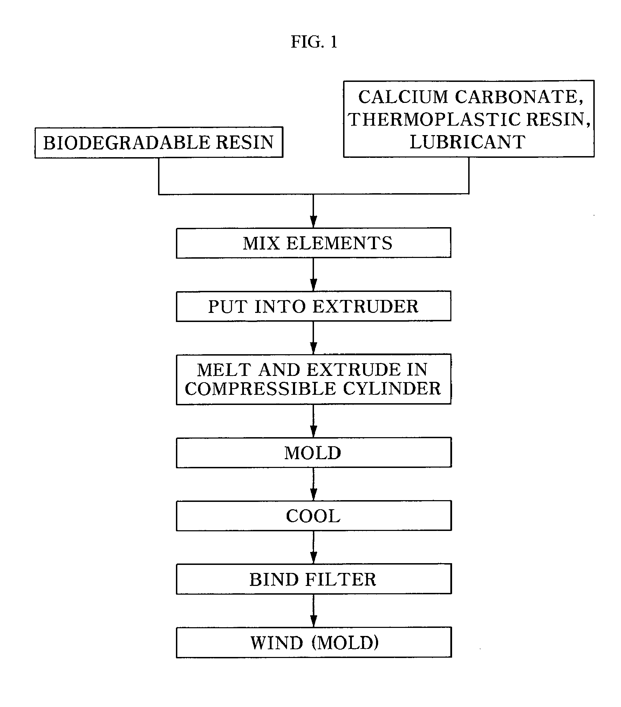

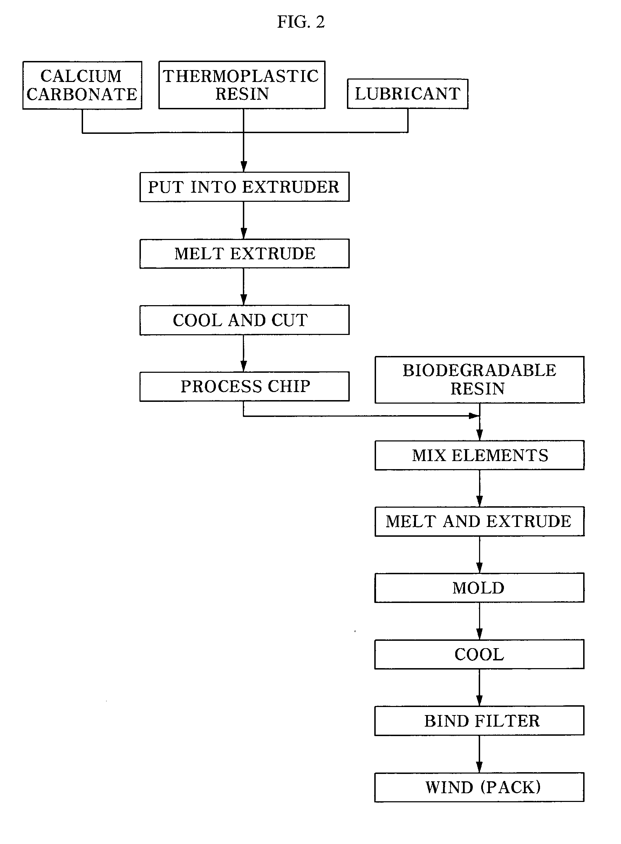

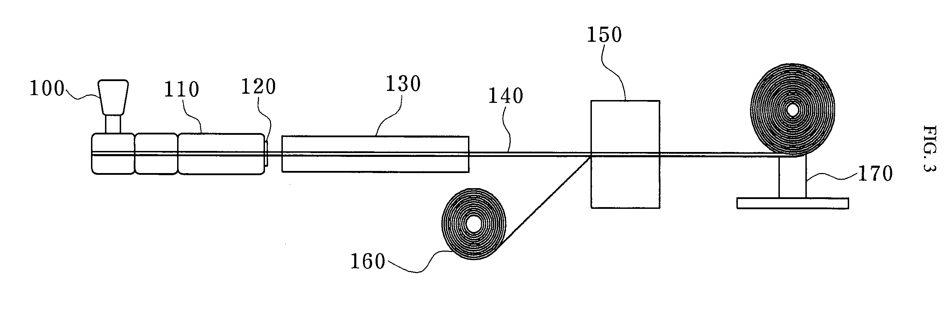

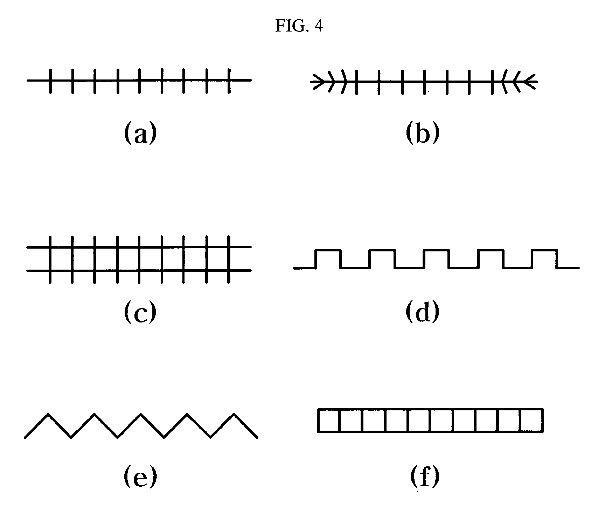

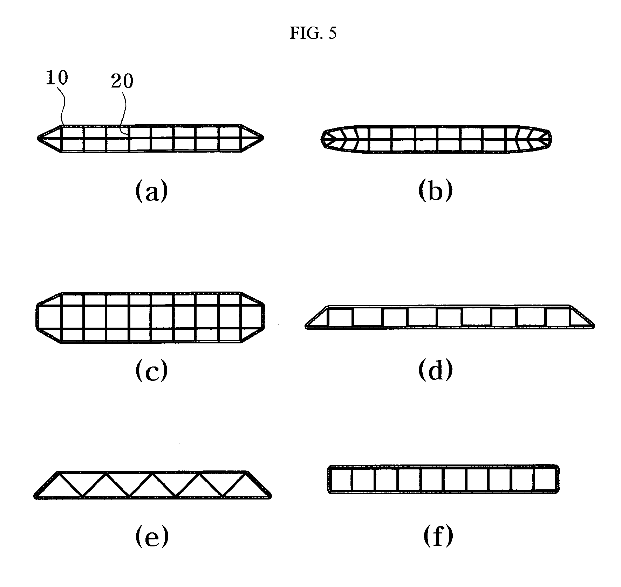

FIGS. 1 and 2 are block diagrams illustrating examples of a process of manufacturing a core of a drain board using a biodegradable resin composition of the present invention, FIG. 3 is a process diagram illustrating an example of a process of manufacturing a core of a drain board according to the present invention, FIG. 4 shows examples of a core of a drain board manufactured by the manufacturing method according to the present invention, and FIG. 5 shows other examples of the core of the drain board of FIG. 4 according to the present invention.

A biodegradable resin composition according to the present invention is composed of a mixture of a biodegradable polymer compound, calcium carbonate, a thermoplastic resin and a lubricant in suitable ratios.

According to the present invention, the biodegradable resin composition may include additives such as 5 to 60 parts by weight of the calcium carbonate, 1 to 10 parts by weight of the thermoplastic resin, and 0.1 to 5 parts by weight of the lubricant with respect to 100 parts by weight of the biodegradable polymer compound.

Here, when the calcium carbonate is added at more than 60 parts by weight, a product may be broken during production, or mechanical strength may be considerably reduced, and when the calcium carbonate is added less than 5 parts by weight, defects in productivity are not reduced due to contraction of the biodegradable material (PBS or PBAT).

Here, when the thermoplastic resin is added at more than 10 parts by weight, strength of the product is reduced because it is difficult to mix with the biodegradable material (PBS or PBAT), and when the thermoplastic resin is added at less than 1 part by weight, the strength of the molded product is not uniform due to irregular distribution of the calcium carbonate.

The thermoplastic resin may be polypropylene or polyethylene, or a mixture of polypropylene with polyethylene in suitable weight ratios. For example, the mixture may contain polypropylene and polyethylene in a weight ratio of 1:9 to 9:1.

According to the present invention, when the lubricant is added at more than 5 parts by weight, the product has defects due to excessive lubricating action, and when the lubricant is added at less than 0.1 parts by weight, productivity decreases due to a lack of lubrication. Here, the lubricant is used to improve flowability of the composition of the present invention, dispersibility of the composition, contractibility of a final product, and enhance releasability to obtain a product having a smooth surface.

The kind of lubricant is not specifically limited, and thus, among lubricants for a polymer compound, any one providing physical properties necessary to manufacture a target product of the present invention may be used. The lubricant is generally a higher fatty acid, and preferably one or a mixture of at least two selected from the group consisting of oleic acid amide, erucic acid amide, molybdenum disulfide, glycerol monostearate, palmityl alcohol and silicon powder.

More preferably, the lubricant used herein is a mixture of 40 to 50 wt% of dimethyl silicon oil or a silane coupling agent with low-density polyethylene having an average molecular weight of 5,000 to 10,000.

According to the present invention, the biodegradable polymer compound uses PBS having a weight average molecular weight (M_{w}) of 130,000 to 200,000, or PBAT having a weight average molecular weight (M_{w}) of 110,000 to 150,000, which has a repetitive structure of Formula 1 or 2, respectively.

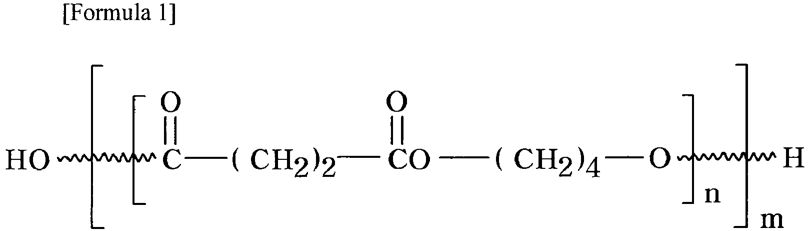

In Formula 1, n is one of 1 to 5, and m is an integer satisfying the above-mentioned range of the weight average molecular weight.

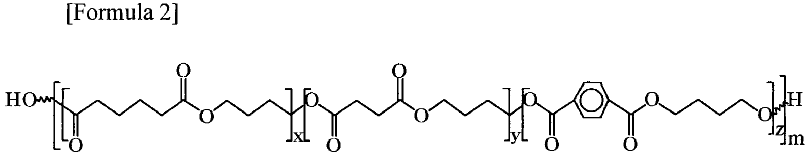

In Formula 2, x, y and z are independently one of 1 to 5, and m is an integer satisfying the above-mentioned range of the weight average molecular weight.

The biodegradable polymer compound used herein may be prepared in a separate condensation polymerization process. As an example, the following condensation polymerization of a PBS resin is provided.

### <Polymerization of PBS Resin>

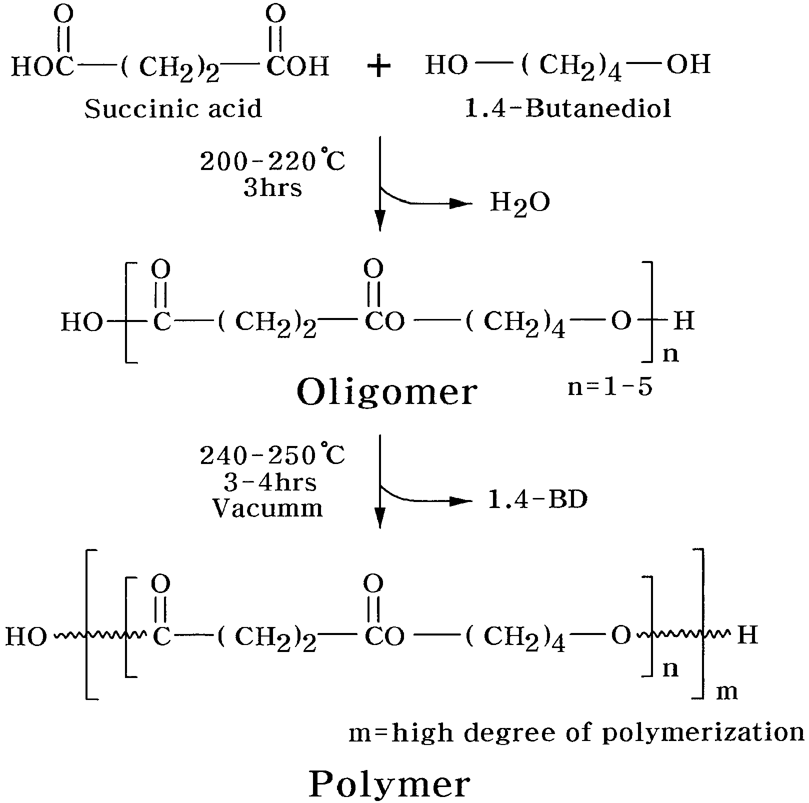

In an example of the polymerization process, a PBS resin uses 1,4-butanediol as glycol and succinic acid as dicarboxylic acid. Here, a molar ratio of dicarboxylic acid to glycol is 1:1.5, temperature is raised in a nitrogen atmosphere, and a theoretical amount of water is drained by esterification at 200 ° C for 2 to 3 hours. Subsequently, a catalyst is added, the temperature is raised again, and condensation polymerization is executed at 245 ° C in a high vacuum of 1 Torr or less. Termination time of the reaction is determined by observing a torque of a stirrer in a reactor.

For uniform mixing, the additives added to a biodegradable aliphatic polymer compound of the present invention are preferably added after being solidified into a pellet and processed in the form of a chip (hereinafter, referred to as a "calcium carbonate chip").

The calcium carbonate chip is formed by pelletizing a mixture including 60 to 90 parts by weight of calcium carbonate, 5 to 15 parts by weight of a thermoplastic resin, and 1 to 5 parts by weight of a lubricant to solidify.

A core of a drain board manufactured using a biodegradable resin composition according to the present invention and a drain board including the same are provided. Configurations thereof are as shown in FIG. 4. The core may have various shapes, and the drain board may have the same shape as shown in FIG. 5 in which the core is surrounded with a filter such as felt.

Referring to FIGS. 1 and 2, examples of methods of manufacturing a core of a drain board using a biodegradable resin composition for a core of a drain board having excellent extrusion productivity according to the present invention and a drain board are explained.

A preferable method of manufacturing a core of a drain board, as shown in FIG. 1, includes preparing a mixture including a biodegradable polymer compound, calcium carbonate, a thermoplastic resin, and a lubricant in above-mentioned ratios, melting the mixture at 160 to 230 °C, providing the melted product to dies 120, extrusion-molding a core 10 through the dies 120 at 150 to 220 °C, and cooling the extrusion-molded product.

Here, a cooling temperature of a cooler used in the cooling operation may be 10 to 25 °C at an entry, 15 to 30 °C at a middle part and 15 to 30 °C at an end.

In the method of manufacturing a core of a drain board, the operation of preparing the mixture may be divided into an operation of forming a chip by mixing calcium carbonate, a thermoplastic resin and a lubricant in suitable ratios, melt-extruding and pelletizing the mixture, and an operation of mixing the chip with a biodegradable polymer compound.

Here, the mixture of the additives may include 60 to 90 parts by weight of calcium carbonate, 5 to 15 parts by weight of a thermoplastic resin, and 1 to 5 parts by weight of a lubricant.

The core of a drain board manufactured by the manufacturing method described above may have various shapes as shown in FIG. 4.

Meanwhile, the method of manufacturing a drain board according to the present invention further includes an operation of surrounding an outside of the cooled product with a filter, in addition to the operations according to the method of manufacturing a core of a drain board as described above. The operation of surrounding the outside of the molded product with a filter may be executed by bonding the filter to the outside of the molded core through ultrasonic fusion, or melting an adhesive resin to adhere the filter thereto.

Here, the filter may be felt.

Referring to FIGS. 2 and 3, the method includes putting a biodegradable polymer compound, calcium carbonate, a thermoplastic resin and a lubricant into a mixer 100 to prepare a mixture of the above-mentioned additives in suitable ratios, putting the mixture into an extruder 110 to melt at 160 to 230 ° C, extruding the melted product through dies 120 at 150 to 220 ° C to mold a core 10, cooling the extrusion-molded product, cooling the core 140, which is the extrusion-molded product, by passing through a hydrocooling device 130, surrounding an outside of the core 10, which is the cool molded product, with filters 20 and 160, fusing the filters with the core 10 in an ultrasonic fuser 150 or a resin binder to bind, and winding the core 10 bound with the filter 160 using a winder 170.

Here, when the core, which is the molded product extracted from the dies 120, is cooled using the cooling device, to prevent contraction and deformation of the core extracted at a high temperature due to quick cooling, the cooling temperature may be adjusted to 10 to 25 °C at the entry of the cooling device, 15 to 30 °C at the middle part thereof, and 15 to 30 °C at the end thereof.

The filter may be felt.

In the method of manufacturing a core of a drain board, the operation of preparing a mixture may be divided into an operation of forming a chip by mixing calcium carbonate, a thermoplastic resin and a lubricant in suitable ratios, melt-extruding and pelletizing the mixture, and an operation of mixing the chip with a biodegradable polymer compound.

Here, the mixture may include 60 to 90 parts by weight of calcium carbonate, 5 to 15 parts by weight of a thermoplastic resin, and 1 to 5 parts by weight of a lubricant.

The drain board manufactured by the above-described method may have various shapes as shown in FIG. 5.

Hereinafter, the present invention will be described in further detail with reference to preferable examples. However, the present invention is not limited to the following examples.

Evaluation of physical properties of samples manufactured according to the following examples and comparative examples are executed by the method to be described below. Categories for evaluating physical properties were followed by the standard for the quality of a drain (core+filter) according to the guide specification for port and fishing port construction of Ministry of Land, Transport and Maritime Affairs (MLTMA), and the samples were prepared according to the standards described in the specifications.
1) Tensile Strength : KS K ISO 10319
2) Width : KS K 0505
3) Drain Performance : ASTM D 4716
4) Contraction Ratio : (Width of Extrusion Die - Width of Final Molded Product)/Width of Extrusion Die x 100

### [Comparative Example 1]

When 10 parts by weight of a polypropylene (M720 produced by GS Caltex) pellet was mixed with respect to 100 parts by weight of PBS (G4560M produced by S-EnPol), it was confirmed that a final molded product passing through a molding machine contracted approximately 18.8% based on a width of an extrusion die, and had reasonable moldability since it did not have a strong tendency to turn back to an initial contraction form.

As a result of evaluating tensile strength of the molded product produced under the above-mentioned conditions, it was confirmed that the molded product had a tensile strength of approximately 10% of that of the conventional polypropylene molded product, and the molded product was easily damaged by small external power.

### [Comparative Example 2]

When extrusion was executed by the same method as described in Comparative Example 1, except that 20 parts by weight of a polypropylene (M720 produced by GS Caltex) pellet was used, it was confirmed that cracks occurred on a surface of a molded product after cooling, and the molded product was easily damaged by small external power.

### [Comparative Example 3]

When extrusion was executed by the same method as described in Comparative Example 1, except that 5 parts by weight of talc powder and 5 parts by weight of lime powder were used instead of polypropylene and melted at 180 ° C, it was confirmed that the molded product contracted approximately 51% at the time that the molded product was in contact with cooling water, had a strong tendency to turn back to an initial contraction state, and thus had poor moldability.

As a result of evaluating tensile strength of the molded product produced with the above-mentioned composition, it was confirmed that the molded product had a tensile strength of approximately 70% of that of the conventional polypropylene molded product.

### [Comparative Example 4]

When extrusion was executed by the same method as described in Comparative Example 1, except that 20 parts by weight of poly lactic acid (PLA; 4043D produced by Nature Works), instead of polypropylene, was mixed in a pellet state, and melted at 165 °C, it was confirmed that the molded product contracted approximately 44% at the time that the molded product was in contact with cooling water, had a strong tendency to turn back to an initial contraction state, and thus had poor moldability.

### [Comparative Example 5]

When extrusion was executed after PBS alone was melted at 170 °C without another additive, it was confirmed that the molded product contracted approximately 59% at the time that the molded product was in contact with cooling water, had a strong tendency to turn back to an initial contraction state, and thus had poor moldability.

### [Example 1]

When, under the extrusion conditions including a hydrocooling process, 20 parts by weight of CaCo₃ powder, 3 parts by weight of a thermoplastic resin (polypropylene, H5300 produced by Honam Petrochemical Corp.) and 2 parts by weight of a lubricant wax (PU produced by Honam Petrochemical Corp.) were mixed with 100 parts by weight of a biodegradable resin (G4560M produced by S-EnPol) in a pellet state, melted at 190 °C and extruded at 30 m/sec in an extruder, it was confirmed that a final molded product passing through a molding machine contracted approximately 18.8% based on a width of an extrusion die, had less tendency to turn back to an initial contraction state, and thus possibly ensured a product width that the specification requires.

### [Example 2]

When extrusion was executed by the same method as described in Example 1, except that 3 parts by weight of polyethylene (PE960 produced by Hanwha Chemical Corp.) was used instead of polypropylene as a thermoplastic resin, it was confirmed that a final molded product passing through a molding machine contracted approximately 18.8% based on a width of an extrusion die, had less tendency to turn back to an initial contraction state, and thus possibly ensured a product width that the specification requires.

### [Example 3]

When extrusion was executed by the same method as described in Example 1, except that 10 parts by weight of CaCo₃ powder was used, it was confirmed that a final molded product passing through a molding machine contracted approximately 18.8% based on a width of an extrusion die, had less tendency to turn back to an initial contraction state, and thus possibly ensured a product width that the specification requires.

### [Example 4]

When extrusion was executed by the same method as described in Example 1, except that a CaCo₃ chip formed by melting and extruding 85 parts by weight of CaCo₃ powder, 12 parts by weight of a thermoplastic resin (polypropylene, H5300 produced by Honam Petrochemical Corp.), and 3 parts by weight of a lubricant wax (PU produced by Honam Petrochemical Corp.), and then pelletizing the mixture to have a diameter of 2.5 mm and a length of 2 mm was mixed with 100 parts by weight of the biodegradable resin used in Example 1, melted at 170 °C and extruded at a production speed of 30 m/sec, it was confirmed that a final molded product passing through a molding machine contracted approximately 18.8% based on a width of an extrusion die, had less tendency to turn back to an initial contraction state, and thus possibly ensured a product width that the specification requires.

### [Example 5]

When extrusion was executed by the same method as described in Example 4, except that 40 parts by weight of CaCo₃ chip was used, it was confirmed that a final molded product passing through a molding machine contracted approximately 18.8% based on a width of an extrusion die, had less tendency to turn back to an initial contraction state, and thus possibly ensured a product width that the specification requires.

### [Example 6]

When extrusion was executed by the same method as described in Comparative Example 4, except that 45 parts by weight of CaCo₃ chip was used, it was confirmed that a final molded product passing through a molding machine contracted approximately 18.8% based on a width of an extruding die, had less tendency to turn back to an initial contraction state, and thus possibly ensured a product width that the specification requires.

The results of evaluating physical properties of the samples prepared according to Examples and Comparative Examples are shown in Table 1.

**[Table 1]**

| | Example | | | | | | Comparative Example | | | | |
|---|---|---|---|---|---|---|---|---|---|---|---|
| | 1 | 2 | 3 | 4 | 5 | 6 | 1 | 2 | 3 | 4 | 5 |
| Tensile Strength (N/g) | 2.4 | 2.5 | 2.6 | 2.4 | 2.3 | 2.2 | 1.2 | 0.9 | 1.9 | 1.7 | 2.7 |
| Width (mm) | 95 | 95 | 95 | 95 | 95 | 95 | 95 | 95 | 57 | 66 | 48 |
| Drain Performance (cm²/s) Pressure: 300 kPa | 145 | 145 | 150 | 150 | 145 | 140 | 80 | - | - | - | - |
| Contraction Ratio (%) | 18.8 | 18.8 | 18.8 | 18.8 | 18.8 | 18.8 | 18.8 | 18.8 | 51 | 44 | 59 |

| | | | | | | | | | | | |
|---|---|---|---|---|---|---|---|---|---|---|---|
| * 1) '-' denotes that a test was not available because of the destroy of a sample, 2) Width of Extrusion Die: 117 mm, Specified Width of Product: 95 mm, and 3) The width shown in Table 1 is a value measured after the product passed through a cooling molding machine, and the values in Comparative Examples 3 to 5 were obtained when the products did not pass through the molding machine due to contraction. | | | | | | | | | | | |

Meanwhile, quality characteristics of end products of a drain board using a biodegradable prefabricated vertical drain (PVD) core and non-degradable PVD core according to the present invention were compared, and the results are shown in Table 2.

As a biodegradable PVD core, the biodegradable PVD core produced in Example 4 was used, and as a non-degradable PVD core, the conventional non-degradable PVD core composed of polypropylene was used for comparative analysis of their quality characteristics.

The standard of quality applied to the analysis cited the standard according to the guide specification for port and fishing port construction of MLTM, which is currently the most widely applied in Korea.

To analyze mathematical characteristics including drain performance, Typar Filter produced by Dupont was applied as a filter.

According to the comparative analysis, it was confirmed that, although the biodegradable PVD core according to the present invention is of inferior quality to the non-degradable PVD core (polypropylene-based), the biodegradable PVD core mostly satisfied the standard according to the guide specification for port and fishing port construction of MLTM.

**[Table 2]**

| | Test Method | Unit | Standard | Biodegradable PVD | Non-degradable PVD | Remark |
|---|---|---|---|---|---|---|
| Weight | KS K ISO 9864 | g/m | 80 or more | 92.4 | 88.5 | Pass |
| Thickness | KS K ISO 9863-1 | mm | 2 or more | 3.6 | 3.7 | Pass |
| Width | KS K 0505 | mm | 1005±5 | 98.2 | 97.3 | Pass |
| Tensile Strength | KS K ISO 10319 | kN/total width | 1.5 or more | 3.1 | 3.4 | Pass |
| Drain Performance | ASTM D 4716 | cm²/s | 180 or more when a pressure of 10 kPa is applied | 185 | 190 | Pass |
| | | | 140 or more when a pressure of 300 kPa is applied | 150 | 160 | Pass |

| | | | | | | |
|---|---|---|---|---|---|---|
| * Table 1 shows the evaluation results for a core only, and Table 2 shows values in end products of a drain board using Typar produced by Dupont instead of felt to evaluate mathematical characteristics. | | | | | | |

While the invention has been shown and described with reference to certain exemplary embodiments thereof, it will be understood by those skilled in the art that various changes in form and details may be made therein without departing from the scope of the invention as defined by the appended claims.

## Claims

1. A biodegradable resin composition for manufacturing a core of a drain board, comprising:
5 to 60 parts by weight of calcium carbonate, 1 to 10 parts by weight of a thermoplastic resin, and 0.1 to 5 parts by weight of a lubricant, which are mixed with respect to 100 parts by weight of a biodegradable polymer compound.

2. The composition according to claim 1, wherein the biodegradable polymer compound is poly butylene succinate (PBS) or poly butylene adipate-co-terephthalate (PBAT).

3. The composition according to claim 1, wherein the thermoplastic resin is one selected from the group consisting of a polypropylene resin, a polyethylene resin and a mixture thereof.

4. The composition according to claim 1, wherein the additives are added in the form of a chip processed by solidifying the mixture in a pellet state to have 60 to 90 parts by weight of calcium carbonate, 5 to 15 parts by weight of a thermoplastic resin, and 1 to 5 parts by weight of a lubricant.

5. The composition according to claim 1, wherein the lubricant is one or a mixture of at least two selected from the group consisting of oleic acid amide, erucic acid amide, molybdenum disulfide, glycerol monostearate, palmityl alcohol and silicon powder.

6. The composition according to claim 1, wherein the lubricant includes 40 to 50 wt% of dimethyl silicon oil or a silane coupling agent in low-density polyethylene having an average molecular weight of 5,000 to 10,000.

7. A core of a drain board manufactured using the biodegradable resin composition of any one of claims 1 to 6.

8. A drain board in which an outside of the core of the drain board of claim 7 is surrounded with a filter.
